# EUROPÄISCHE PATENTSCHRIFT

(11) **EP 4 357 203 B1**
(45) Veröffentlichungstag und Bekanntmachung des Hinweises auf die Patenterteilung: **14.05.2025**
(21) Anmeldenummer: 22202316.0
(22) Anmeldetag: 18.10.2022
(51) Int. Cl.: B60R 19/02, B60R 19/12

(54) **STOSSFÄNGERANORDNUNG MIT DOPPELQUERTRÄGER UND ABSCHLEPPÖSE**
BUMPER ASSEMBLY WITH DOUBLE CROSS BEAM AND TOW LUG
ENSEMBLE PARE-CHOCS COMPRENANT UNE TRAVERSE DOUBLE ET UN CROCHET DE REMORQUAGE

(43) Veröffentlichungstag der Anmeldung: 24.04.2024
(73) Patentinhaber: Benteler Automobiltechnik GmbH, 33102 Paderborn (DE)
(72) Erfinder: Hitz, Andreas, 59597 Erwitte (DE); Nitschke, Christoph, 33175 Bad Lippspringe (DE); Sørlie, Håvard, 2390 Moelv (NO)
(74) Vertreter: Osterhoff, Utz

(56) Entgegenhaltungen:
- EP-A1- 1 884 416
- EP-A1- 3 085 554
- DE-U1- 202021 103 263

## Beschreibung

Die vorliegende Erfindung betrifft eine Stoßfängeranordnung gemäß den Merkmalen im Oberbegriff von Anspruch 1.

Aus dem Stand der Technik ist es bekannt, front- und endseitig von Kraftfahrzeugen Stoßfängeranordnungen einzusetzen. Hierzu wird ein Querträger verwendet, der sich im Wesentlichen über einen Großteil der Breite des Kraftfahrzeuges erstreckt. Der Querträger kann eine Krümmung um die Kraftfahrzeugvertikalrichtung aufweisen. Der Querträger ist über Crashboxen an das Kraftfahrzeug gekoppelt.

Im Falle eines Auftreffens auf ein Hindernis oder einer Kollision mit einem anderen Kraftfahrzeug, so prallt dieses an den Querträger, in der Folge deformieren sich die Crashboxen und wandeln Crashenergie in Umformarbeit um. Die initiale Crashenergie wird hierdurch verringert. Eine weitere Intrusion in das Kraftfahrzeug oder den Motorraum wird durch den Querträger selbst ebenfalls verhindert.

Es ist notwendig, an einem Kraftfahrzeug eine Abschleppöse bzw. einen Abschlepphaken vorzusehen, so dass das Kraftfahrzeug im Falle eines Unfalls bzw. technischen Defekts abgeschleppt werden kann.

Beispielsweise ist aus der DE 10 2022 001 443 A1 eine Querträgeranordnung mit Abschleppvorrichtung offenbart.

Ferner muss eine Abschleppöse vorgesehen sein, so dass ein Transport des Kraftfahrzeuges beispielsweise ein Überseetransport möglich ist. Das Kraftfahrzeug wird dann in einem Container oder auf einem Schiff über die Abschleppöse gegen Wegrollen verzurrt. Die Kräfte auf die Abschleppöse wirken also in Kraftfahrzeuglängsrichtung. Beim Verzurren auf dem Boden jedoch auch anteilig in Kraftfahrzeugvertikalrichtung sowie in Kraftfahrzeugquerrichtung.

Ferner ist aus der DE 20 2021 103 263 U1 eine Stoßfängeranordnung aufweisend einen Hauptquerträger und einen Hilfsquerträger die einstückig über vertikale Streben miteinander verbunden sind unter Integration einer Abschleppöse bekannt.

Aus optischen Gründen und auch aus Fahrsicherheitsgründen wird ein Abschlepphaken bzw. Abschleppöse während des regulären Betriebs des Kraftfahrzeuges entfernt. Am Kraftfahrzeug ist dann eine Buchse, mithin eine Öffnung mit Gewinde, vorgesehen, in welche die Abschleppöse eingesetzt bzw. eingeschraubt wird. Eine solche Abschleppöse bzw. Abschleppösenbuchse steht damit in einem Zielkonflikt mit der Steifigkeit des Querträgers sowie der Möglichkeit der Crashbox sich zu verformen.

Ferner ist es aus dem Stand der Technik bekannt, Crashanforderungen zu erfüllen, insbesondere für den MPDB-Crashtest, mithin ein Crashtest mit seitlicher Überdeckung bzw. großer Auftrifffläche.

Aufgabe der vorliegenden Erfindung ist es, ausgehend vom Stand der Technik, eine Stoßfängeranordnung aufzuzeigen, die ein, gegenüber dem Stand der Technik verbessertes Crashverhalten bei gleichzeitiger Möglichkeit der Integration einer Abschleppöse und günstiger Produzierbarkeit ermöglicht.

Die zuvor genannte Aufgabe wird erfindungsgemäß bei einer Stoßfängeranordnung für ein Kraftfahrzeug mit den Merkmalen im Anspruch 1 gelöst.

Vorteilhafte Ausgestaltungsvarianten sind Gegenstand der abhängigen Ansprüche.

Die zuvor genannte Stoßfängeranordnung für ein Kraftfahrzeug weist einen Hauptquerträger und einen, auf die Kraftfahrzeugvertikalrichtung bezogen, darunter angeordneten Hilfsquerträger auf. Hauptquerträger und Hilfsquerträger erstrecken sich vorzugsweise über einen Großteil der Kraftfahrzeugbreite. Hauptquerträger und Hilfsquerträger, sind insbesondere aus Stahlwerkstoff hergestellt, bevorzugt als Hohlprofil mit einem Schließblech. Der Hauptquerträger und der Hilfsquerträger sind jedoch bevorzugt aus einem jeweils extrudierten Werkstoff hergestellt. Der Hauptquerträger und Hilfsquerträger können um die Kraftfahrzeugvertikalrichtung eine Krümmung aufweisen. Der Hauptquerträger und der Hilfsquerträger sind über vertikale Streben miteinander gekoppelt. Die Stoßfängeranordnung selber ist über Crashboxen mit dem Fahrzeug gekoppelt.

Erfindungsgemäß zeichnet sich die Stoßfängeranordnung nunmehr dadurch aus, dass die vertikalen Streben als separates Hohlprofil ausgebildet sind. In mindestens einer vertikal verlaufenden Wandfläche des separaten Hohlprofils ist eine die Wandfläche durchgreifende Abschleppösenbuchse eingesetzt und mit dieser Wandfläche gekoppelt. Die Kopplung erfolgt insbesondere durch ein thermisches Fügeverfahren.

Die vertikale Strebe ist bevorzugt als extrudiertes Hohlprofil, insbesondere aus einem Leichtmetallwerkstoff ganz besonders bevorzugt aus einer Aluminiumlegierung hergestellt. Im Querschnitt ist die vertikale Strebe insbesondere als Mehrkammerhohlprofil ausgebildet. Dabei können die einzelnen Kammern nebeneinander, bezogen auf die Kraftfahrzeugquerrichtung angeordnet sein. Die Kammern können jedoch auch in Kraftfahrzeuglängsrichtung hintereinander angeordnet sein.

Erfindungsgemäß hat sich hier neben besonders einfacher Montierbarkeit erwiesen, dass die vertikalen Streben den Hauptquerträger und den Hilfsquerträger miteinander fest verbinden. Durch die Integration der Abschleppösenbuchse in die vertikale Strebe wird somit die Steifigkeit weder des Hauptquerträgers noch des Hilfsquerträgers beeinflusst. Ferner ist die Abschleppösenbuchse nicht mit einer Crashbox verbunden, so dass die Deformation der Crashbox im Crashfall ebenfalls nicht durch die Abschleppösenbuchse beeinflusst wird.

Zudem erlaubt die Anordnung der Abschleppösenbuchse in der vertikalen Strebe, einen weitaus größeren Freiheitsgrad bei der vertikalen Positionierung und damit mehr zusätzlichen Spielraum für Designwünsche der Fahrzeugfront oder des Fahrzeugbaus.

Insbesondere ist das Hohlprofil der separaten Strebe als im Querschnitt geschlossenes Hohlprofil ausgebildet. Dieses Hohlprofil weist zwei, in Kraftfahrzeuglängsrichtung zueinander beabstandete Wandflächen auf, wobei die Abschleppösenbuchse beide Wandflächen durchgreift. Hierzu ist die Abschleppösenbuchse insbesondere an einem hinteren Ende radial aufgeweitet bzw. weist einen radial abstehenden Flansch auf. Der radial abstehende Flansch hintergreift in Kraftfahrzeuglängsrichtung die hintere Wandfläche. Durch diese Maßnahme wird sichergestellt, dass eine in Kraftfahrzeuglängsrichtung aufgebrachte Zugkraft zusätzlich von dem radial abstehenden Flansch mit abgestützt wird, neben einer sonst möglichen Koppelung der Abschleppösenbuchse mit dem Hohlprofil. Im Falle eines Fahrzeugcrashs kann sich auch die vertikale Strebe verformen und Crashenergie abbauen. Die Abschleppösenbuchse ist bevorzugt nur mit der hinteren Wand der vertikalen Strebe zusätzlich gekoppelt, so dass die Abschleppösenbuchse im Falle eines Frontalchrashs nach hinten durch die vertikale Strebe herausdrückt, ohne das Verformungsverhalten der vertikalen Strebe selbst zu beeinflussen.

Ferner hat sich das Durchgreifen zweier Wandflächen bevorzugt in Kombination mit dem radial abstehenden Flansch als vorteilig für ein Verzurren des Kraftfahrzeuges erwiesen, dadurch, dass die Abschleppösenbuchse zwei Wandflächen durchgreift und die Wandflächen in Kraftfahrzeuglängsrichtung zueinander beabstandet sind, ist auch die Aufbringung von in Kraftfahrzeugvertikalrichtung und/oder in Kraftfahrzeugquerrichtung wirkenden Verspannungskräften von bis zu mehreren Tonnen gut auffangbar, ohne dass die Querträgeranordnung sich verformt.

Weiterhin besonders bevorzugt sind die Crashboxen auf die Kraftfahrzeugvertikalrichtung bezogen auf Höhe des Hauptquerträgers angeordnet.

Die vertikale Strebe ist bevorzugt in Kraftfahrzeugquerrichtung direkt unter der Crashbox angeordnet und bevorzugt schmaler als die Crashbox selbst. Es ist auch möglich, dass die vertikale Strebe in Querrichtung versetzt zur Position der Crashbox angeordnet ist, und zwar insbesondere um maximal die Breite der Crashbox, gemessen von der Mitte der Crashbox zur Mitte der vertikalen Strebe. So wird eine optimale Stabilität, Kraftübertragung und Versteifung zwischen den Querträgern noch sichergestellt.

Mithin sind die Crashboxen hinter dem Hauptquerträger angeordnet.

Bevorzugt können weiterhin Zusatzcrashboxen angeordnet sein. Die Zusatzcrashboxen sind dann bevorzugt auf die Kraftfahrzeugvertikalrichtung bezogen auf Höhe des Hilfsquerträgers angeordnet und/oder auf Höhe der vertikalen Streben angeordnet.

Die vertikalen Streben selbst sind insbesondere derart ausgebildet, dass diese als Hohlprofil ausgebildet sind. Die vertikalen Streben können aus Stahlwerkstoff oder auch aus einem Aluminiumwerkstoff ausgebildet sein. Die vertikalen Streben sind dann bevorzugt mit einer Unterwand des Hauptquerträgers oder mit einer Oberwand des Hilfsquerträgers gekoppelt, insbesondere durch stoffschlüssiges Fügen.

Alternativ oder ergänzend ist es auch möglich, dass die vertikale Strebe ein in Vertikalrichtung überstehenden Flansch aufweist, bevorzugt zwei Flansche, die jeweils auf die Vertikalrichtung bezogen nach oben und unten überstehen. Die Flansche hintergreifen dann bevorzugt eine Hinterwand des Hauptquerträgers bzw. eine Hinterwand des Hilfsquerträgers und sind bevorzugt mit der Hinterwand gekoppelt. Hierdurch wird bei Aufbringen einer Zugkraft in Kraftfahrzeuglängsrichtung über die Abschleppösenbuchse sichergestellt, dass die vertikal verlaufenden Streben am Hauptquerträger und Hilfsquerträger abgestützt sind und somit eine Zugkraft auf das abzuschleppende bzw. zu verzurrende Kraftfahrzeug aufbringen. Es sind bevorzugt zwei vertikale Streben angeordnet. Diese sind bevorzug in einem Längenbereich zwischen 5 und 30 %, insbesondere 5 bis 15 % jeweils kommend von einem Ende von Hauptquerträger und Hilfsquerträger angeordnet.

Zusätzlich können Zusatzstreben, ebenfalls in Kraftfahrzeugvertikalrichtung verlaufend angeordnet sein. Diese Zusatzstreben sind dann jeweils im Bereich oder an dem Ende von Hauptquerträger und Hilfsquerträger angeordnet.

Weitere Vorteile, Merkmale, Eigenschaften, Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung.

Es zeigen:
- Figur 1a bis d: erste Ausführungsvarianten einer erfindungsgemäßen Stoßfängeranordnung in verschiedenen Ansichten,
- Figur 2a bis f: weitere Ausführungsvarianten einer erfindungsgemäßen Stoßfängeranordnung in verschiedenen Ansichten,
- Figur 3a bis e: weitere Ausführungsvarianten einer erfindungsgemäßen Stoßfängeranordnung in verschiedenen Ansichten,
- Figur 4a bis f: weitere Ausführungsvarianten einer erfindungsgemäßen Stoßfängeranordnung in verschiedenen Ansichten,
- Figur 5a bis e: weitere Ausführungsvarianten einer erfindungsgemäßen Stoßfängeranordnung in verschiedenen Ansichten,
- Figur 6a bis d: weitere Ausführungsvarianten einer Stoßfängeranordnung, die zur Illustrierung des Erfindungsgedankens dient in verschiedenen Ansichten.

In den Figuren werden für gleiche oder ähnliche Bauteile dieselben Bezugszeichen verwendet, auch wenn eine wiederholte Beschreibung aus Vereinfachungsgründen entfällt.

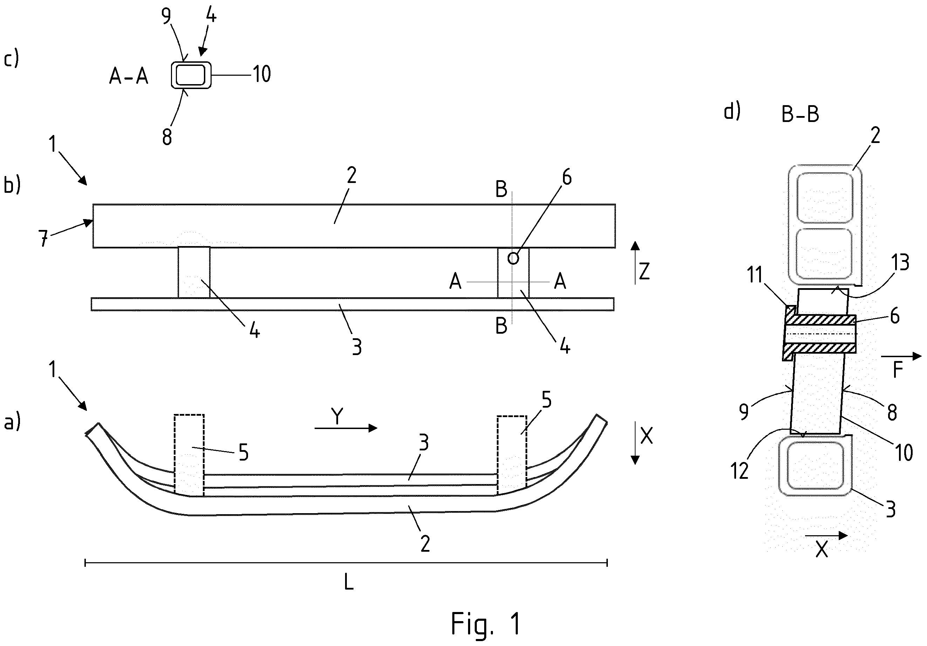

Figuren 1a bis d zeigen eine erfindungsgemäße Stoßfängeranordnung 1 in verschiedenen Ansichten. Gemäß Figur 1a ist die Stoßfängeranordnung 1 in Draufsicht und Figur 1b in Frontansicht gezeigt. Ein auf die Kraftfahrzeugvertikalrichtung Z bezogener Hauptquerträger 2 ist über ein in darunter angeordnetem Hilfsquerträger 3 über vertikale Streben 4 mit dem verbunden. Ferner sind Crashboxen 5 hinter dem Hauptquerträger 2 angeordnet über welche die Stoßfängeranordnung 1 mit einem nicht näher dargestellten Kraftfahrzeug gekoppelt wird. Der Hauptquerträger 2 ist, bezogen auf die Kraftfahrzeuglängsrichtung X nach vorne gegenüber dem Hilfsquerträger 3 versetzt angeordnet. Ferner ist eine Abschleppösenbuchse 6 mit einem nicht näher dargestellten Innengewinde in der vertikalen Strebe 4, auf die rechte Bildebene bezogen, angeordnet. Die vertikalen Streben 4 sind über eine Länge L bezogen von einem Ende 7 des Hauptquerträgers 2 zwischen 5 und 20 % in einem Längenabschnitt in Kraftfahrzeugquerrichtung Y angeordnet.

Gemäß Figur 1c, welche eine Schnittdarstellung gemäß Linie A-A aus Figur 1b darstellt, ist die vertikale Strebe 4 selbst im Querschnitt als geschlossenes Hohlprofil 10 ausgebildet. Dieses weist eine Vorderwand 8 und Rückwand 9 auf.

Gemäß Figur 1d, welche einen Längsschnitt gemäß der Schnittlinie B-B von Figur 1b darstellt, ist die Abschleppösenbuchse 6 die Vorderwand 8 und die Rückwand 9 des Hohlprofils 10 der vertikalen Strebe 4 des Hohlprofils 10 durchgreifend angeordnet. Am rückseitigen Ende befindet sich ein Flansch 11, welcher die Rückwand 9 des Hohlprofils 10 hintergreift und mit ihr insbesondere stoffschlüssig gekoppelt ist. Bei Aufbringen einer Zugkraft F in Kraftfahrzeuglängsrichtung X ist somit die Abschleppösenbuchse 6 zusätzlich an der Rückwand 9 der vertikalen Strebe 4 abgestützt. Die vertikale Strebe 4 ist ferner mit einer Oberwand 12 des unteren Hilfsquerträgers 3 sowie mit einer Unterwand 13 des oberen Hauptquerträgers 2 gekoppelt, hier durch stoffschlüssiges Fügen.

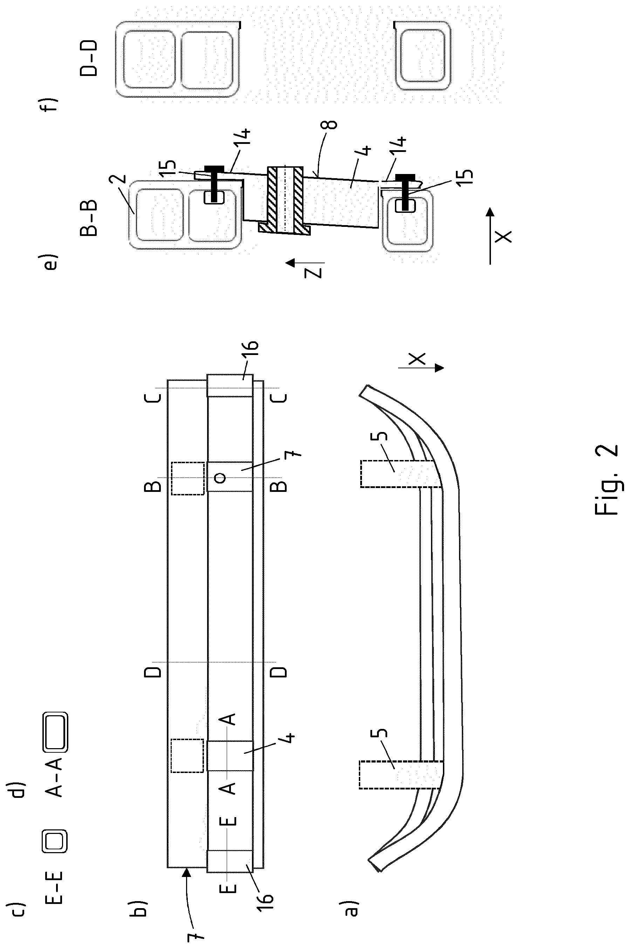

Figuren 2a bis f zeigen eine zweite Ausführungsvariante, analog zur Ersten. Hierbei ist jedoch zum einen ersichtlich, gemäß Figur 2e, dass die vertikale Strebe 4 mit einem in Kraftfahrzeugvertikalrichtung Z überstehenden Flansch 14 ausgebildet ist. Hier findet eine zusätzliche Koppelung statt, beispielsweise durch eine Verschraubung oder Vernietung mit dem Hauptquerträger 2 bzw. Hilfsquerträger 3. Der in Kraftfahrzeugvertikalrichtung Z überstehende Flansch ist von einer Vorderwand 18 der vertikalen Strebe 4 ausgehend ausgebildet.

Ferner dargestellt ist, dass an den Enden 7 von Hauptquerträger 2 und Hilfsquerträger 3 Zusatzstreben 16 angeordnet sind, welche die Enden in Ergänzung zu den vertikalen Streben 4 zusätzlich miteinander koppeln. Ferner kann durch die Zusatzstreben 16 ein Auftreffen auf ein in Kraftfahrzeuglängsrichtung X dahinter nicht näher dargestelltes Rad, an diesem Rad abgestützt werden, sodass sich durch Bereitstellung zusätzlicher Lastpfade eine bessere Crashperformance ergibt.

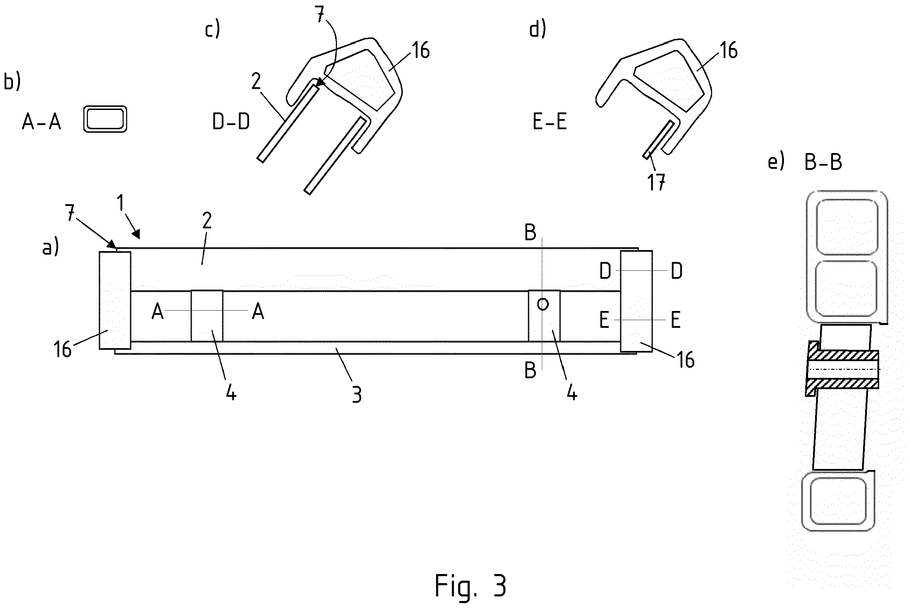

Figuren 3a bis e zeigen eine dritte alternative Ausgestaltungsvariante. Diese ist in Bezug auf die Stoßfängeranordnung 1 zunächst bezüglich der vertikalen Streben 4 analog zwischen der Ausgestaltungsvariante in Figur 1 ausgebildet. An den Enden 7 des Hauptquerträgers 2 und des Hilfsquerträgers 3 ist die Zusatzstrebe 16 aufgesteckt. Dies ist in Figur 3c ersichtlich. Gemäß Figur 3e kann bei Einstückigkeit und Werkstoffeinheitlichkeit von Hauptquerträger 2 und Hilfsquerträger 3 ein Verbindungsteil 17 in Form einer vertikalen Strebe 4 in den Enden lokal ausgebildeten Vorderwandverlängerung ausgebildet sein. Die Zusatzstrebe 16 ist dann ebenfalls aufgesteckt, was in Figur 3d ersichtlich ist.

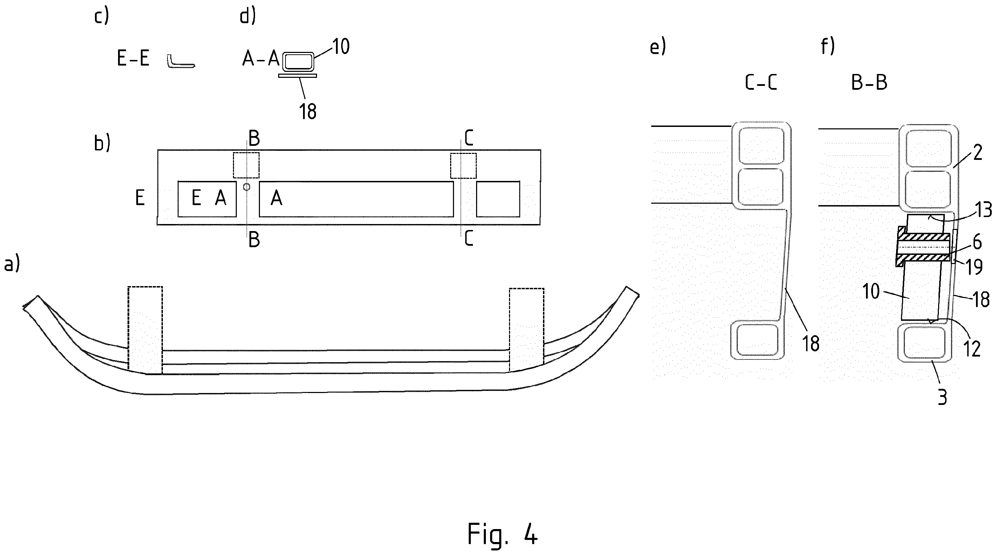

Figuren 4a bis f zeigen eine weitere Ausgestaltungsvariante der vorliegenden Erfindung. Hier dargestellt ist, dass Hauptquerträger 2 und Hilfsquerträger 3 einstückig und werkstoffeinheitlich hergestellt sind. Eine jeweilige Vorderwand ist somit längenabschnittsweise durchgehend ausgebildet, so dass dort eine vertikale Vorderwandverlängerung 18 existiert. Gemäß der Schnittlinie A-A ist das Hohlprofil 10 hinter der Vorderwand angeordnet ist und gemäß Figur 4f mit der Unterwand 13 des Hauptquerträgers 2 und der Oberwand 12 des Hilfsquerträgers 3 verschweißt. Alternativ erfolgt eine Verschweißung mit der Vorderwandverlängerung 18. Eine Ausnehmung 19 lässt die Abschleppösenbuchse 6 die Vorderwand durchgreifen. Die Abschleppösenbuchse 6 ist dann in das Hohlprofil 10 und dessen Vorderwand 8 und Rückwand 9 durchgreifend angeordnet.

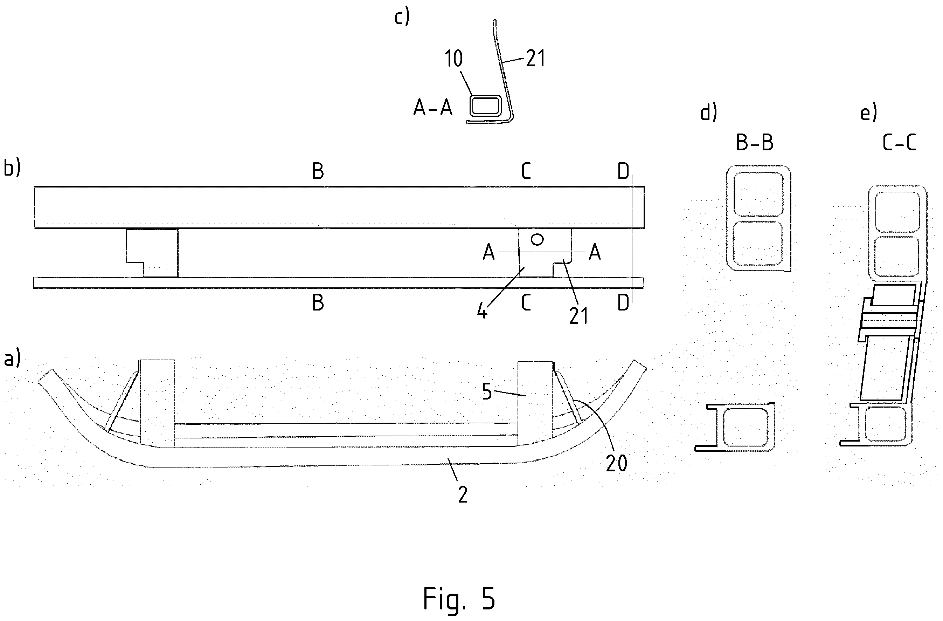

Figuren 5a bis e zeigen eine weitere Ausgestaltungsvariante. Hierbei ist die Crashbox 5 über eine zusätzliche Abstützstrebe 20 seitlich mit dem Hauptquerträger 2 verbunden. Von der vertikalen Strebe 4 steht ein seitlicher Flansch 21 ab. Dieser seitliche Flansch 21 hintergreift seitlich das Hohlprofil 10. Alle übrigen Ausführungen gelten zu Figur 4 analog.

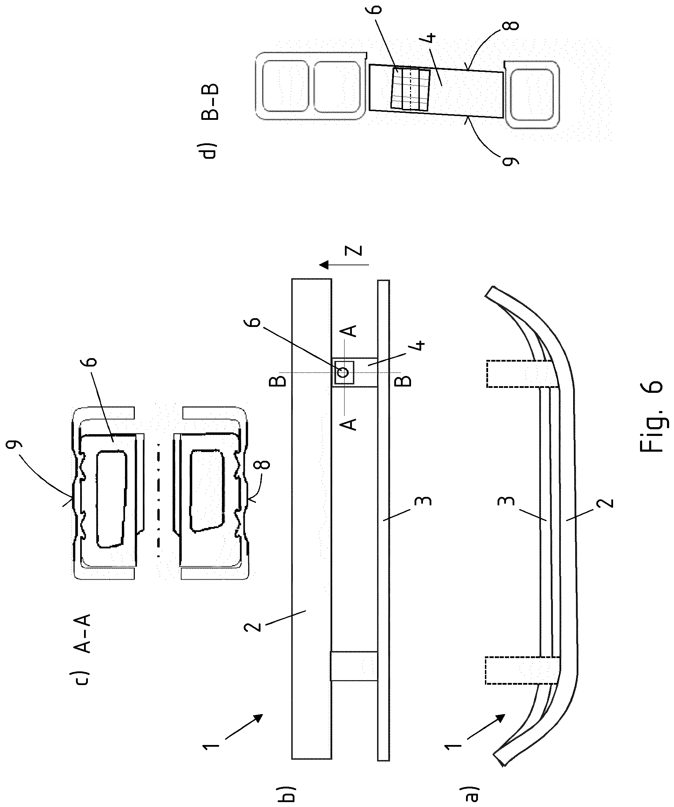

Figur 6 zeigt eine weitere Ausgestaltungsvariante. Hierbei ist in der vertikalen Strebe 4 eine Abschleppösenbuchse 6 eingesetzt. Die Abschleppösenbuchse 6 von innen eingesetzt und dann mit der Vorderwand als auch mit der Rückwand der vertikalen Strebe 4 gekoppelt, hier durch ein Verpressen bzw. Verclinchen. Die Abschleppösenbuchse 6 kann somit, bezogen auf die Kraftfahrzeugvertikalrichtung Z innerhalb der vertikalen Strebe 4 beliebig hoch positioniert werden. Die Abschleppösenbuchse 6 ist bevorzugt ein Profilblock mit Gewindebohrung. Insbesondere ist diese aus einer Leichtmetalllegierung ausgebildet. Sie kann selbst H-förmig sein bzw. im inneren Bereich hohl ausgebildet sein. Somit ist die Abschleppösenbuchse 6 nicht massiv ausgebildet. In einem Crashfall kann dieses sich dann auch in Kraftfahrzeuglängsrichtung X zusammendrücken bzw. stauchen und Crashenergie mit abbauen.

### Bezugszeichen:

- 1 -: Stoßfängeranordnung
- 2 -: Hauptquerträger
- 3 -: Hilfsquerträger
- 4 -: vertikale Strebe
- 5 -: Crashbox
- 6 -: Abschleppösenbuchse
- 7 -: Ende zu 2
- 8 -: Vorderwand zu 10
- 9 -: Rückwand zu 10
- 10 -: Hohlprofil
- 11 -: Flansch zu 6
- 12 -: Oberwand zu 3
- 13 -: Unterwand zu 2
- 14 -: Flansch zu 4
- 15 -: Koppelung
- 16 -: Zusatzstrebe
- 17 -: Verbindungsteil
- 18 -: Vorderwandverlängerung
- 19 -: Ausnehmung
- 20 -: Abstützstrebe
- 21 -: zusätzlicher Flansch
- X -: Kraftfahrzeuglängsrichtung
- Y -: Kraftfahrzeugquerrichtung
- Z -: Kraftfahrzeugvertikalrichtung
- L -: Länge
- F -: Zugkraft

## Patentansprüche

1. Stoßfängeranordnung (1) für ein Kraftfahrzeug, aufweisend einen Hauptquerträger (2), und einen darunter angeordneten Hilfsquerträger (3), welche über vertikale Streben (4) miteinander gekoppelt sind, wobei die Stoßfängeranordnung (1) über Crashboxen (5) mit dem Kraftfahrzeug gekoppelt ist, **dadurch gekennzeichnet, dass** die vertikale Strebe (4) als separates Hohlprofil (10) ausgebildet ist, wobei das Hohlprofil (10) zwei in Kraftfahrzeuglängsrichtung (X) zueinander beabstandete Wandflächen (8, 9) aufweist, wobei eine Abschleppösenbuchse (6) beide Wandflächen (8, 9) durchgreift.

2. Stoßfängeranordnung (1) nach Anspruch 1, **dadurch gekennzeichnet, dass** die Abschleppöse nur mit der in Kraftfahrzeuglängsrichtung hinten liegenden Wandfläche gekoppelt ist.

3. Stoßfängeranordnung (1) nach einem der vorherigen Ansprüche, **dadurch gekennzeichnet, dass** die Crashboxen (5), bezogen auf die Kraftfahrzeugvertikalrichtung (Z) auf Höhe des Hauptquerträgers (2) angeordnet sind.

4. Stoßfängeranordnung (1) nach einem der vorherigen Ansprüche, **dadurch gekennzeichnet, dass** ein Paar Zusatzcrashboxen angeordnet sind, wobei die Zusatzcrashboxen auf Höhe des unteren Hilfsquerträgers (3) angeordnet sind oder dass die Zusatzcrashboxen auf Höhe der vertikalen Streben (4) angeordnet sind.

5. Stoßfängeranordnung (1) nach einem der vorherigen Ansprüche, **dadurch gekennzeichnet, dass** das Hohlprofil (10) mit dem Hauptquerträger (2) an dessen Unterwand (13) und/oder mit dem Hilfsquerträger an dessen Oberwand (12) stoffschlüssig gefügt ist.

6. Stoßfängeranordnung (1) nach einem der vorherigen Ansprüche, **dadurch gekennzeichnet, dass** die vertikalen Streben (4) in Kraftfahrzeugquerrichtung (Y) auf Höhe der Crashboxen (5) angeordnet sind.

7. Stoßfängeranordnung (1) nach einem der vorherigen Ansprüche, **dadurch gekennzeichnet, dass** an außenseitigen Enden (7) von Hauptquerträger (2) und Hilfsquerträger (3) Zusatzstreben (16) in Kraftfahrzeugvertikalrichtung (Z) verlaufen.

8. Stoßfängeranordnung (1) nach einem der vorherigen Ansprüche, **dadurch gekennzeichnet, dass** das Hohlprofil (10) einen in Vertikalrichtung (Z) überstehenden Flansch (14) aufweist, wobei der Flansch (14) mit dem Hauptquerträger (2) und/oder Hilfsquerträger (3) insbesondere auf einer dem Fahrzeug abgewandten Seite gekoppelt ist.

9. Stoßfängeranordnung (1) nach einem der vorherigen Ansprüche, **dadurch gekennzeichnet, dass** der Hauptquerträger (2) und der Hilfsquerträger (3) einstückig und werkstoffeinheitlich sind und über eine vertikal Vorderwandverlängerung (18) zusätzlich miteinander verbunden sind, wobei die separate vertikale Strebe (4) in Kraftfahrzeuglängsrichtung (X) hinter der Vorderwandverlängerung (18) angeordnet ist.

10. Stoßfängeranordnung (1) nach einem der vorherigen Ansprüche, **dadurch gekennzeichnet, dass** die Abschleppösenbuchse (6) an einem Ende einen radial überstehenden Flansch (11) aufweist, wobei der Flansch (11) eine vertikal verlaufende Wand der vertikalen Strebe (4) hintergreift und mit dieser gekoppelt ist, wobei der Flansch (14) bevorzugt in Kraftfahrzeuglängsrichtung (X) hinten liegend angeordnet ist.

## Claims

1. Bumper assembly (1) for a motor vehicle, having a main cross beam (2) and an auxiliary cross beam (3) arranged underneath, which are coupled to one another via vertical struts (4), wherein the bumper assembly (1) is coupled to the motor vehicle via crash boxes (5), **characterised in that** the vertical strut (4) is configured as a separate hollow profile (10), wherein the hollow profile (10) has two wall surfaces (8, 9) spaced apart from one another in the longitudinal direction (X) of the motor vehicle, wherein a tow lug bush (6) extends through both wall surfaces (8, 9).

2. Bumper assembly (1) according to claim 1, **characterised in that** the tow lug is only coupled to the wall surface at the rear in the longitudinal direction of the motor vehicle.

3. Bumper assembly (1) according to any one of the preceding claims, **characterised in that** the crash boxes (5) are arranged at the level of the main cross beam (2) in relation to the vertical direction (Z) of the motor vehicle.

4. Bumper assembly (1) according to any one of the preceding claims, **characterised in that** a pair of additional crash boxes are provided, wherein the additional crash boxes are arranged at the level of the lower auxiliary cross beam (3) or **in that** the additional crash boxes are arranged at the level of the vertical struts (4).

5. Bumper assembly (1) according to any one of the preceding claims, **characterised in that** the hollow profile (10) is joined in a material-bonded manner to the main cross beam (2) on its lower wall (13) and/or to the auxiliary cross beam on its upper wall (12).

6. Bumper assembly (1) according to any one of the preceding claims, **characterised in that** the vertical struts (4) are arranged at the level of the crash boxes (5) in the transverse direction (Y) of the motor vehicle.

7. Bumper assembly (1) according to any one of the preceding claims, **characterised in that** additional struts (16) extend in the vertical direction (Z) of the motor vehicle at the outer ends (7) of the main cross beam (2) and auxiliary cross beam (3).

8. Bumper assembly (1) according to any one of the preceding claims, **characterised in that** the hollow profile (10) has a flange (14) projecting in the vertical direction (Z), wherein the flange (14) is coupled to the main cross beam (2) and/or auxiliary cross beam (3), in particular on a side facing away from the vehicle.

9. Bumper assembly (1) according to any one of the preceding claims, **characterised in that** the main cross beam (2) and the auxiliary cross beam (3) are in one piece and made from a single material and are additionally connected to one another via a vertical front wall extension (18), wherein the separate vertical strut (4) is arranged behind the front wall extension (18) in the longitudinal direction (X) of the motor vehicle.

10. Bumper assembly (1) according to any one of the preceding claims, **characterised in that** the tow lug bush (6) has a radially projecting flange (11) at one end, wherein the flange (11) engages behind a vertically extending wall of the vertical strut (4) and is coupled thereto, wherein the flange (14) is preferably arranged at the rear in the longitudinal direction (X) of the motor vehicle.

## Revendications

1. Ensemble pare-chocs (1) pour un véhicule à moteur, présentant une traverse principale (2) et une traverse auxiliaire (3) disposée en dessous, qui sont couplées entre elles par des entretoises verticales (4), dans lequel l'ensemble pare-chocs (1) est relié au véhicule à moteur par des crash-boxes (5), **caractérisé en ce que** l'entretoise verticale (4) est réalisée sous la forme d'un profilé creux (10) séparé, dans lequel le profilé creux (10) présente deux surfaces de paroi (8, 9) espacées l'une par rapport à l'autre dans le sens longitudinal du véhicule à moteur (X), une douille de crochet de remorquage (6) traversant les deux surfaces de paroi (8, 9).

2. Ensemble pare-chocs (1) selon la revendication 1, **caractérisé en ce que** le crochet de remorquage n'est relié qu'à la surface de paroi située à l'arrière dans le sens longitudinal du véhicule à moteur.

3. Ensemble pare-chocs (1) selon l'une quelconque des revendications précédentes, **caractérisé en ce que** les crash-boxes (5) sont disposées, par rapport à la direction verticale du véhicule à moteur (Z), à hauteur de la traverse principale (2).

4. Ensemble pare-chocs (1) selon l'une quelconque des revendications précédentes, **caractérisé en ce qu'**une paire de crash-boxes supplémentaires sont disposées, dans lequel les crash-boxes supplémentaires sont disposées à hauteur de la traverse auxiliaire inférieure (3), ou **en ce que** les crash-boxes supplémentaires sont disposées à hauteur des entretoises verticales (4).

5. Ensemble pare-chocs (1) selon l'une quelconque des revendications précédentes, **caractérisé en ce que** le profilé creux (10) est assemblé par liaison de matière à la traverse principale (2) sur sa paroi inférieure (13) et/ou à la traverse auxiliaire sur sa paroi supérieure (12).

6. Ensemble pare-chocs (1) selon l'une quelconque des revendications précédentes, **caractérisé en ce que** les entretoises verticales (4) sont disposées dans le sens transversal (Y) du véhicule à moteur à hauteur des crash-boxes (5).

7. Ensemble pare-chocs (1) selon l'une quelconque des revendications précédentes, **caractérisé en ce que** des barres supplémentaires (16) sont disposées dans le sens vertical (Z) du véhicule à moteur sur des extrémités extérieures (7) de la traverse principale (2) et de la traverse auxiliaire (3).

8. Ensemble pare-chocs (1) selon l'une quelconque des revendications précédentes, **caractérisé en ce que** le profilé creux (10) présente une bride (14) dépassant dans le sens vertical (Z), dans lequel la bride (14) est couplée à la traverse principale (2) et/ou à la traverse auxiliaire (3) en particulier sur un côté opposé au véhicule.

9. Ensemble pare-chocs (1) selon l'une quelconque des revendications précédentes, **caractérisé en ce que** la traverse principale (2) et la traverse auxiliaire (3) sont d'un seul tenant et sont homogènes en matière et sont reliées entre elles en supplément par l'intermédiaire d'une rallonge verticale de tablier (18), dans lequel l'entretoise verticale (4) séparée est disposée dans le sens longitudinal (X) du véhicule à moteur derrière la rallonge de tablier (18).

10. Ensemble pare-chocs (1) selon l'une quelconque des revendications précédentes, **caractérisé en ce que** la douille de crochet de remorquage (6) présente sur une extrémité une bride (11) dépassant radialement, dans lequel la bride (11) s'engrène par l'arrière avec une paroi s'étendant verticalement de l'entretoise verticale (4) et est couplée à celle-ci, dans lequel la bride (14) est disposée de manière préférée dans le sens longitudinal (X) du véhicule à moteur à l'arrière.
